# FASCICULE DE BREVET EUROPEEN

(11) **EP 1 413 735 B1**
(45) Date de publication et mention de la délivrance du brevet: **13.07.2005**
(21) Numéro de dépôt: 03292160.3
(22) Date de dépôt: 03.09.2003
(51) Int. Cl.: F02K 1/76

(54) **Inverseur de poussée électromécanique pour turboréacteur à controle permanent de position**
Elektromechanische Schubumkehrvorrichtung mit einer dauerhafte Positionskontrolle für einen Flugzeugstriebwerk
Electromechanical thrust reverser with a permanent position control for an aircraft engine

(30) Priorité: 25.10.2002 FR 0213409
(43) Date de publication de la demande: 28.04.2004
(73) Titulaire: Hispano Suiza, 92700 Colombes (FR)
(72) Inventeur: Colotte, Baptiste, 77000 Melun (FR); Courpied, Alexandre, 75007 Paris (FR); Croixmarie, Marc, 91830 Auvernaux (FR); Joland, Patrick, 77166 Evry Gregy sur Yerres (FR); Le Gouellec, Gilles, 75018 Paris (FR); Michaud, Marion, 94320 Thiais (FR)
(74) Mandataire: Joly, Jean-Jacques

(56) Documents cités:
- WO-A-03/050404
- US-A- 5 826 823
- US-A- 5 960 626
- US-B1- 6 439 504

## Description

La présente invention se rapporte au domaine général des inverseurs de poussée pour turboréacteur à double flux. Elle vise plus particulièrement un inverseur de poussée électromécanique comportant au moins deux éléments déplaçables coopérant, en position d'ouverture de l'inverseur, à la production de l'inversion de poussée, tel que, par exemple, un inverseur de poussée à grilles, à portes ou à coquilles.

Les inverseurs de poussée équipant les turboréacteurs à double flux sont bien connus dans le domaine de l'aéronautique. Ils servent à augmenter la sécurité d'un avion en fournissant une aide au freinage lors de l'atterrissage de celui-ci. Les inverseurs de poussée se présentent généralement sous la forme d'au moins deux éléments mobiles, telles que des portes coulissantes, qui sont susceptibles d'être déplacés par rapport à la nacelle du turboréacteur par l'intermédiaire de vérins de commande de façon à constituer, lors du fonctionnement en inversion de poussée, c'est à dire en position d'ouverture, un obstacle pour une partie des gaz issus du turboréacteur qui sont redirigés vers l'avant de façon à fournir une poussée inverse à l'avion.

Afin d'offrir au système de commande de l'inverseur de poussée une parfaite connaissance de la position dans laquelle se trouvent les portes de l'inverseur, il est connu d'équiper celles-ci de multiples capteurs de position reliés directement à un boîtier de commande de l'inverseur. Généralement, ces capteurs sont positionnés au niveau de chaque vérin de commande et ils sont associés à des détecteurs d'état de chaque système de verrouillage de l'inverseur. Ces capteurs et ces détecteurs représentent ainsi une sécurité pour le pilote qui doit être en permanence tenu informé de la position déployée ou rétractée des portes de inverseur.

Comme un inverseur de poussée à deux portes coulissantes comporte généralement, par porte, trois vérins de commande et trois systèmes différents de verrouillage, il en résulte un grand nombre de capteurs de position par inverseur. Une telle abondance de capteurs a pour effet de multiplier les risques possibles de panne de ces capteurs, rendant l'ensemble ainsi crée peu fiable. Cette abondance de capteurs est également préjudiciable pour la masse de l'inverseur de poussée.

En outre, les capteurs de position généralement utilisés sont des senseurs de butée signalant uniquement la position déployée ou rétractée de l'inverseur. De tels capteurs ne permettent pas de fournir une information suffisamment fiable sur la position exacte des portes de l'inverseur. En effet, en cas de blocage ou de grippage de l'une des portes, il est difficile, voire impossible de connaître la position exacte dans laquelle se situe l'inverseur de poussée.

US 5,960,626 décrit un système de commande électrique pour inverseur de poussée. US 6,439,504 décrit un inverseur de poussée dont les portes sont commandées chacune par un boîtier électronique de commande, ces boîtiers étant reliés entre eux et à un calculateur électronique du moteur.

### Objet et résumé de l'invention

La présente invention vise donc à pallier de tels inconvénients en proposant un inverseur de poussée qui permet d'offrir une connaissance permanente de la position des portes, même en cas de panne, afin d'accroître la sécurité de l'avion.

A cet effet, il est prévu un inverseur de poussée pour turboréacteur destiné à être fixé sur un avion, caractérisé en ce qu'il comporte : deux portes déplaçables entre une position d'ouverture et une position de fermeture de l'inverseur, les portes étant chacune contrôlée par un boîtier électronique de commande ; au moins un capteur par porte mesurant au moins une donnée de position de la porte, ledit au moins un capteur de chaque porte étant relié au boîtier électronique de commande qui contrôle la porte afin de lui transmettre la donnée de position de la porte, les boîtiers électroniques de commande étant reliés entre eux afin de s'échanger ladite donnée de position ; et un calculateur électronique pleine autorité comportant deux voies reliées chacune à un boîtier électronique de commande afin de recevoir de chacun desdits boîtiers électroniques les données de positions de chacune des portes et une donnée sur l'état de fonctionnement de chacun desdits boîtiers électroniques, les voies étant reliées entre elles afin de s'échanger les données de positions des portes et d'état des boîtiers électroniques de sorte que le pilote de l'avion est en permanence informé de la position des portes et de l'état des boîtiers électroniques, même en cas de panne de l'un des boîtiers électroniques ou de l'une des voies du calculateur électronique pleine autorité.

De la sorte, les échanges de données entre les boîtiers électroniques de commande et entre les voies du calculateur permettent d'améliorer l'efficacité de transmission des données au pilote de l'avion, notamment en cas de panne de l'un des boîtiers ou de l'une des voies du calculateur. Ces transmissions de données à l'avion sont assurées par une duplication des données, et non par une redondance des capteurs, assurant ainsi une meilleure fiabilité d'une part, et une diminution de la masse d'autre part.

Chaque porte est avantageusement déplaçable sous l'action d'au moins un vérin de commande et l'inverseur comporte, pour chaque porte, un premier capteur positionné au niveau du au moins un vérin de commande de façon à mesurer la position du vérin de commande. De préférence, le premier capteur mesure en continu la position du vérin de commande. Une mesure en continu de la position de chaque porte permet notamment d'assurer une synchronisation du déplacement de l'inverseur. Elle permet également de détecter rapidement un éventuel grippage ou blocage de l'inverseur ce qui limite les dommages potentiels que peut engendrer un grippage ou blocage.

A chaque porte est associé un dispositif de blocage mécanique permettant d'assurer une retenue de la porte, l'inverseur comportant, pour chaque porte, un deuxième capteur mesurant une donnée d'état du dispositif de blocage mécanique. De même, un dispositif de verrouillage en butée permettant d'assurer une retenue de la porte peut également être prévu, l'inverseur comportant alors pour chaque porte un troisième capteur mesurant une donnée d'état d'un tel dispositif.

Afin de pallier des cas de double pannes indépendantes, chaque boîtier électronique de commande est avantageusement relié aux deux voies du calculateur électronique pleine autorité de sorte que le pilote de l'avion est en permanence informé de la position des portes et de l'état des boîtiers électroniques, même en cas de panne de l'un des boîtiers électroniques et de l'une des voies du calculateur électronique pleine autorité.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est un schéma illustrant un exemple de réalisation de l'inverseur de poussée selon l'invention ; et
- la figure 2 est un schéma fonctionnel de l'exemple de réalisation de l'inverseur de poussée de la figure 1.

### Description détaillée d'un mode de réalisation

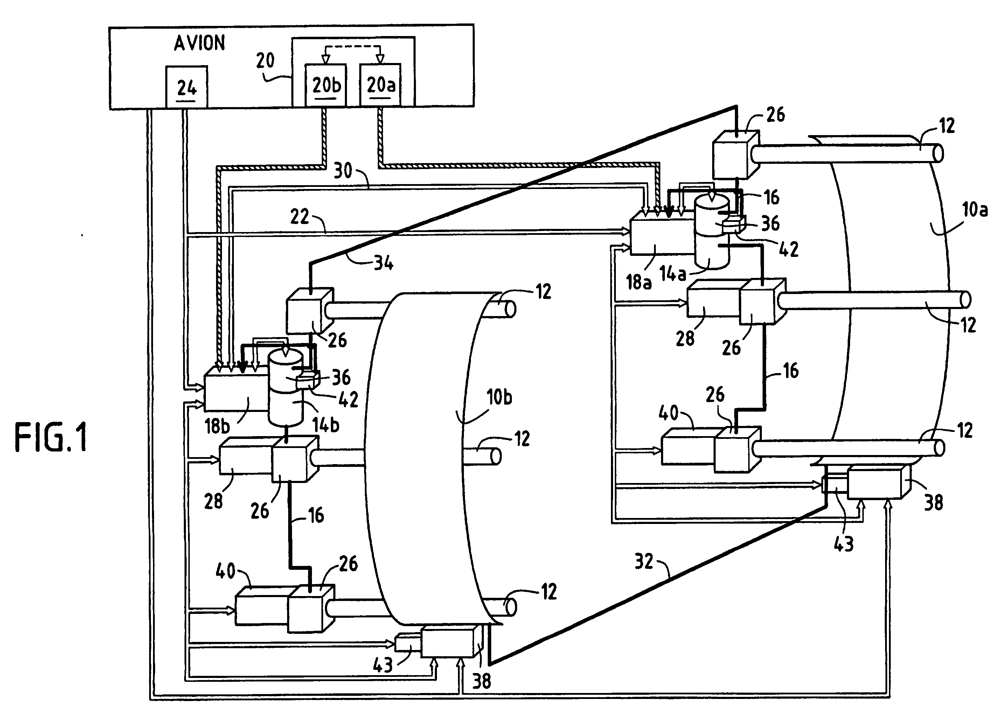

On se réfère tout d'abord à la figure 1 qui illustre un exemple de réalisation d'un inverseur de poussée selon l'invention.

L'inverseur de poussée comporte deux portes 10a, 10b déplaçables chacune entre une position d'ouverture et une position de fermeture de l'inverseur par au moins un vérin de commande 12 (trois vérins sont représentés sur la figure 1, un vérin central et deux vérins positionnés aux deux extrémités latérales de chaque porte).

L'inverseur comporte en outre deux moteurs électriques 14a, 14b contrôlant chacun le déplacement d'une porte. Ces moteurs électriques entraînent les vérins 12 de commande de chaque porte 10a, 10b par l'intermédiaire d'arbres de transmission 16 reliant les vérins de commande de chaque porte entre eux.

Chaque moteur électrique 14a, 14b est directement monté sur un boîtier électronique de commande 18a, 18b qui gère toute la séquence de déplacement des deux portes et régule la vitesse de rotation du moteur électrique. Chaque boîtier électronique de commande 18a, 18b est relié électriquement à l'une des deux voies 20a, 20b d'un calculateur électronique pleine autorité 20 communément dénommé FADEC (Full Authority Digital Engine Control). L'ordre de déploiement ou de rétraction de l'inverseur de poussée est émis par le calculateur FADEC vers les boîtiers électroniques 18a, 18b. Il est également possible d'intégrer les boîtiers électroniques dans le calculateur FADEC. Les voies 20a, 20b du calculateur électronique pleine autorité 20 peuvent échanger des données entre elles.

L'alimentation électrique des boîtiers électroniques de commande 18a, 18b est effectuée par l'intermédiaire d'un harnais électrique 22 connecté sur le réseau électrique 24 de l'avion sur lequel le turboréacteur est monté. Les boîtiers électroniques de commande transforment et adaptent le signal électrique afin d'alimenter les moteurs électriques 14a, 14b.

Les vérins 12 de commande des portes de l'inverseur sont du type électromécanique. Ils sont entraînés par des boîtiers d'engrenages 26 montés sur chaque vérin. La loi de commande (en vitesse ou de type out ou rien) des portes 10a, 10b de l'inverseur est transmise des boîtiers électroniques vers chaque vérin de commande 12 par l'intermédiaire des moteurs électriques 14a, 14b, des arbres de transmission 16 et des boîtiers d'engrenages 26.

Une prise de mouvement 28 peut être prévue au niveau de l'un des vérins de commande 12 afin de permettre une commande manuelle de la porte associée au vérin de commande, notamment lors des opérations de maintenance de l'inverseur de poussée. Sur l'exemple illustré par la figure 1, le vérin 12 central présente une telle prise de mouvement 28 au niveau de son boîtier d'entraînement 26. Les boîtiers d'entraînement de chaque porte étant reliés entre eux, cette prise permet ainsi à un opérateur en charge de la maintenance de piloter l'ouverture et/ou la fermeture des portes de l'inverseur à l'aide d'une seule manivelle, par exemple. L'accès à la prise de mouvement 28 de chaque porte peut être reliée électriquement au boîtier électronique de commande 18a, 18b et ainsi désactiver l'alimentation électrique lors de ces opérations de maintenance afin d'éviter tout déploiement intempestif de l'inverseur.

Les boîtiers électroniques de commande 18a, 18b peuvent en outre échanger des données entre eux par l'intermédiaire d'une liaison électrique 30 de type harnais. Ces échanges de données entre les deux boîtiers électroniques permettent notamment d'assurer une comparaison des informations de positions provenant des deux portes. Un lien mécanique 32 entre les deux portes 10a, 10b et un arbre flexible de synchronisation 34 reliant entre eux des vérins de chaque porte peuvent être prévus afin de faciliter la synchronisation du déplacement des deux portes.

L'inverseur de poussée comporte trois niveaux de verrouillage qui permettent d'assurer individuellement la retenue de l'inverseur de poussée.

Un premier niveau de verrouillage est réalisé par un dispositif de blocage mécanique 36, appelé verrou primaire, associé à chaque porte de l'inverseur. Chaque verrou primaire est monté directement sur le moteur électrique 14a, 14b et il est commandé par le boîtier électronique 18a, 18b. Ces verrous primaires 36 permettent d'assurer individuellement une retenue de la porte qui lui est associée. Par exemple, ils peuvent être de type frein à disque ou de type blocage par pion venant entraver le mouvement de l'arbre de transmission.

Compte-tenu que les deux portes sont liées mécaniquement par l'intermédiaire des liens 32 et 34, le verrou primaire 36 de l'une des portes constitue un second niveau de verrouillage pour l'autre porte dont il forme un verrou secondaire. Le verrou secondaire est destiné à reprendre les chargements de la porte en cas de défaillance du verrou primaire. Ainsi, si le dispositif de blocage de l'une des portes est considéré comme le verrou primaire, le dispositif de blocage de l'autre porte peut être considéré comme étant le verrou secondaire et vice-versa.

Le troisième niveau de verrouillage est réalisé par un dispositif de verrouillage en butée 38, appelé verrou tertiaire, qui est positionné à une extrémité latérale de chaque porte ou d'une seule porte. Ces verrous tertiaires peuvent être reliés aux boîtiers électroniques 18a, 18b, au calculateur FADEC 20 et/ou directement au cockpit de l'avion. Ils sont de préférence commandés directement depuis le cockpit de l'avion afin d'assurer une sûreté de fonctionnement suffisante et de s'affranchir d'éventuels modes communs. En effet, lorsque reliés au FADEC ou au cockpit de l'avion, les verrous tertiaires restent opérationnels même en cas de défaillance des boîtiers électroniques de commande 18a, 18b. Ils permettent de reprendre les chargements de la porte de l'inverseur en cas de défaillance des verrous primaire et secondaire.

En outre, l'inverseur de poussée selon l'invention comporte au moins un capteur ou détecteur par porte mesurant au moins une donnée de position de la porte 10a, 10b. Ces capteurs ou détecteurs qui permettent de contrôler la position ouverte ou fermée de chaque porte de inverseur sont reliés électriquement au boîtier électronique 18a, 18b de la porte contrôlée par ce boîtier. Ils sont alimentés électriquement par ces boîtiers électroniques.

Avantageusement, l'inverseur de poussée comporte, pour chaque porte 10a, 10b, un jeu de capteurs présentant un premier capteur 40 mesurant une donnée de position de la porte, un deuxième capteur 42 mesurant une donnée d'état du verrou primaire 36 et un troisième capteur 43 mesurant une donnée d'état du verrou tertiaire 38.

Le premier capteur 40 mesurant une donnée de position de la porte est par exemple positionné au niveau du boîtier d'engrenages 26 de l'un des vérins de commande 12 de la porte. Le premier capteur 40 est relié au boîtier électronique de commande 18a, 18b afin de lui transmettre les données concernant la position de la porte.

De préférence, le premier capteur 40 mesure en continu la position du vérin de commande 12 auquel il est associé. Par exemple, le premier capteur est un capteur électrique de déplacement angulaire de type « resolver » (capteur de rotation) qui permet de fournir un signal électrique caractéristique de la position angulaire d'un rotor (non représenté sur les figures) du boîtier d'engrenages 26 monté sur le vérin de commande 12 auquel le capteur est associé. La mesure en continu assurée par un tel capteur de déplacement angulaire permet de connaître à tout moment la position du vérin de commande et autorise ainsi la synchronisation des portes lors de leurs déplacements. En effet, une telle mesure de la position permet de détecter tout écart de position entre les deux portes 10a, 10b et donc de réguler la vitesse de chacun des deux moteurs électriques 14a, 14b par l'intermédiaire des boîtiers électroniques de commande 18a, 18b afin d'obtenir un déplacement correct de l'inverseur. D'autre part, la mesure en continu de la position de chaque porte permet de détecter un éventuel blocage ou grippage d'une porte de façon beaucoup plus précoce par rapport à de simples senseurs de butée. Ceci évite donc aux moteurs électriques de forcer les portes à se déplacer conduisant généralement à une accentuation du blocage ou grippage. De la sorte, l'utilisation de capteurs de déplacement angulaire assure une autoprotection de l'inverseur de façon à minimiser les dommages potentiels, et donc les coûts de réparation associés. Enfin, la mesure en continu est un moyen de détecter d'éventuels non-déverrouillages des verrous 36, 38 qui n'auraient pas été détectés, ce qui améliore la sécurité.

Les deuxièmes et troisièmes capteurs 42, 43 peuvent être des détecteurs d'état du verrou primaire et du verrou tertiaire qui informent les boîtiers électroniques 18a, 18b contrôlant chaque porte de l'état verrouillé ou déverrouillé des verrous. Les deuxièmes et troisièmes capteurs 42, 43 sont reliés au boîtier électronique 18a, 18b afin de lui transmettre des données concernant la position des verrous. Par exemple, ces capteurs peuvent être des proximètres de type optique ou magnétique ou encore des contacteurs mécaniques.

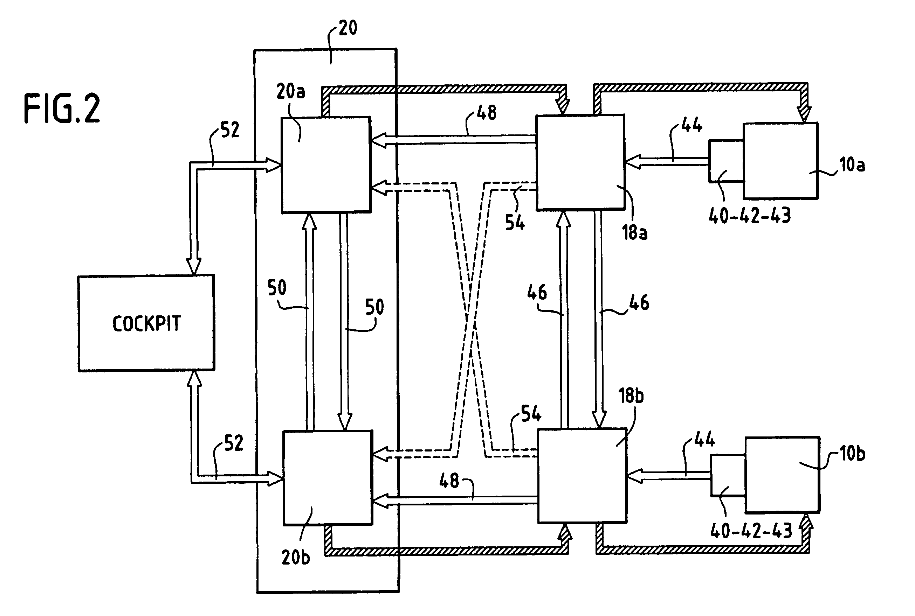

Comme illustré par la figure 2, les capteurs 40, 42 et 43 de chaque porte 10a, 10b transmettent au boîtier électronique 18a, 18b qui contrôle la porte les données de position de la porte et de l'état de chaque verrou primaire et tertiaire (transmissions 44). Les boîtiers électroniques 18a, 18b qui sont reliés entre eux par la liaison électrique 30 (voir figure 1) s'échangent les données de position de chaque porte et d'état de chaque verrou primaire et tertiaire (transmissions 46), de sorte que chaque boîtier électronique reçoit les données provenant des deux jeux de capteurs. Les voies 20a, 20b du calculateur FADEC 20 qui sont reliées à chaque boîtier électronique 18a, 18b reçoivent ainsi les données provenant des deux jeux de capteurs 40, 42 et 43 (transmissions 48). Elles sont donc individuellement informées de la position de chaque porte 10a, 10b et de l'état de chaque verrou primaire et tertiaire. Par ailleurs, chaque boîtier électronique 18a, 18b envoie également des données concernant son propre état de fonctionnement vers la voie 20a, 20b correspondante du calculateur FADEC (transmissions 48). Les voies du calculateur FADEC peuvent s'échanger ces données entre elles (transmissions 50). Le calculateur électronique pleine autorité transmet alors au cockpit de l'avion les données de position des deux portes 10a, 10b et de l'état de chaque verrou primaire et tertiaire, ainsi que les données concernant l'état de fonctionnement des deux boîtiers électroniques 18a, 18b (transmissions 52).

Ainsi, grâce à ces croisements de données, l'inverseur de poussée selon l'invention permet d'informer en permanence le système de commande de l'inverseur de poussée de la position des deux portes de l'inverseur et de l'état de fonctionnement des deux boîtiers électroniques, et cela dans tous les cas de panne. Ainsi :
- en cas de panne de l'un des boîtiers électroniques 18a, 18b : l'état de non-fonctionnement de ce boîtier électronique est envoyé à la voie 20a, 20b du calculateur FADEC qui lui est associée. Comme chaque boîtier électronique reçoit les données concernant la position des deux portes 10a, 10b, celles-ci sont transmises à la voie 20a, 20b du calculateur FADEC associée au boîtier électronique restant. De plus, puisque les deux voies 20a, 20b du calculateur FADEC s'échangent les données, chacune d'elles est informée sur l'état du système de commande de l'inverseur de poussée ;
- en cas de panne de l'une des voies 20a, 20b du calculateur FADEC : étant donnée que chaque voie du calculateur FADEC reçoit les données concernant la position des deux portes et l'état de fonctionnement des deux boîtiers électroniques, ces données seront transmises au système de commande de l'inverseur de poussée par la voie restante du calculateur FADEC ;
- en cas de panne d'un boîtier électronique 18a, 18b et d'une voie 20a, 20b du calculateur FADEC associés à la même porte 10a, 10b : ce cas de panne correspondant au cas de panne d'une voie du calculateur FADEC décrit ci-dessus, la voie restante du calculateur FADEC transmettant au système de commande de l'inverseur de poussée les données ; et
- afin de traiter un cas de panne d'un boîtier électronique 18a, 18b et d'une voie 20a, 20b du calculateur FADEC qui ne sont pas associés à la même porte 10a, 10b, il est avantageusement prévu de relier chaque boîtier électronique à chaque voie du calculateur FADEC de sorte que la voie restante du calculateur FADEC reçoit toutes les données nécessaires pour les transmettre au système de commande de l'inverseur de poussée. Ces transmissions 54 de données entre les boîtiers électroniques et les voies du calculateur FADEC sont représentées en pointillés sur la figure 2.

## Revendications

1. Inverseur de poussée pour turboréacteur destiné à être fixé sur un avion, comportant :
- deux portes (10a, 10b) déplaçables entre une position d'ouverture et une position de fermeture de l'inverseur, lesdites portes étant chacune contrôlée par un boîtier électronique de commande (18a, 18b) ;
- au moins un capteur (40, 42, 43) par porte mesurant au moins une donnée de position de ladite porte, ledit au moins un capteur de chaque porte étant relié audit boîtier électronique de commande qui contrôle ladite porte afin de lui transmettre ladite donnée de position de ladite porte, lesdits boîtiers électroniques de commande étant reliés entre eux afin de s'échanger ladite donnée de position ; et
- un calculateur électronique pleine autorité (20) comportant deux voies (20a, 20b) reliées chacune à un boîtier électronique de commande (18a, 18b) afin de recevoir de chacun desdits boîtiers électroniques les données de positions de chacune desdites portes et une donnée sur l'état de fonctionnement de chacun desdits boîtiers électroniques, **caractérisé en ce que** lesdites voies sont reliées entre elles afin de s'échanger lesdites données de positions desdites portes et d'état desdits boîtiers électroniques de sorte que le pilote de l'avion est en permanence informé de la position desdites portes et de l'état desdits boîtiers électroniques, même en cas de panne de l'un desdits boîtiers électroniques ou de l'une des voies dudit calculateur électronique pleine autorité.

2. Inverseur de poussée selon la revendication 1, **caractérisé en ce que** chaque porte est déplaçable sous l'action d'au moins un vérin de commande (12), ledit inverseur comportant, pour chaque porte, un premier capteur (40) positionné au niveau dudit au moins un vérin de commande de façon à mesurer la position dudit vérin de commande.

3. Inverseur selon la revendication 2, **caractérisé en ce que** ledit premier capteur (40) mesure en continu la position dudit vérin de commande.

4. Inverseur selon l'une des revendications 2 ou 3, **caractérisé en ce qu'**à chaque porte est associé un dispositif de blocage mécanique (36) permettant d'assurer une retenue de ladite porte, ledit inverseur comportant, pour chaque porte, un deuxième capteur (42) mesurant une donnée d'état dudit dispositif de blocage mécanique.

5. Inverseur selon la revendication 4, **caractérisé en ce qu'**à chaque porte est associé un dispositif de verrouillage en butée (38) permettant d'assurer une retenue de ladite porte, ledit inverseur comportant, pour chaque porte, un troisième capteur (43) mesurant une donnée d'état dudit dispositif de verrouillage en butée.

6. Inverseur de poussée selon l'une quelconque des revendications 1 à 5, **caractérisé en ce que** chaque boîtier électronique de commande (18a, 18b) est relié aux deux voies (20a, 20b) dudit calculateur électronique pleine autorité (20) de sorte que le pilote de l'avion est en permanence informé de la position desdites portes et de l'état desdits boîtiers électroniques, même en cas de panne de l'un desdits boîtiers électroniques et de l'une des voies dudit calculateur électronique pleine autorité.

## Patentansprüche

1. Schubumkehrvorrichtung für ein Turbostrahltriebwerk, das dazu bestimmt ist, an einem Flugzeug befestigt zu werden, mit.
- zwei Klappen (10a, 10b), die zwischen einer Öffnungsstellung und einer Schließstellung der Umkehrvorrichtung beweglich sind, wobei die Klappen jeweils über ein elektronisches Steuergehäuse (18a, 18b) gesteuert werden;
- wenigstens einem Sensor (40, 42, 43) pro Klappe, der wenigstens eine gegebene Positionsgröße der Klappe mißt, wobei der wenigstens eine Sensor jeder Klappe mit dem elektronischen Steuergehäuse, das die Klappe steuert, verbunden ist, um die gegebene Positionsgröße der Klappe an dieses zu übertragen, wobei die elektronischen Steuergehäuse untereinander verbunden sind, um die gegebene Positionsgröße untereinander auszutauschen; und
- einem Vollautoritäts-Elektronikrechner (20), der zwei Kanäle (20a, 20b) aufweist, die jeweils mit einem elektronischen Steuergehäuse (18a, 18b) verbunden sind, um von einem jeden der elektronischen Gehäuse die Positionsdaten einer jeden Klappe sowie eine gegebene Große über den Betriebszustand eines jeden elektronischen Gehäuses zu erhalten,
**dadurch gekennzeichnet,**
**daß** die Kanäle untereinander verbunden sind, um die Positionsdaten der Klappen und die Zustandsdaten der elektronischen Gehäuse untereinander auszutauschen, so daß der Pilot des Flugzeugs permanent über die Position der Klappen und über den Zustand der elektronischen Gehäuse, selbst bei einem Ausfall von einem der elektronischen Gehäuse oder von einem der Kanale des Vollautontats-Elektronikrechners informiert wird.

2. Schubumkehrvorrichtung nach Anspruch 1, **dadurch gekennzeichnet, daß** jede Klappe unter der Wirkung von wenigstens einem Steuerzylinder (12) beweglich ist, wobei die Umkehrvorrichtung für jede Klappe einen ersten Sensor (40) aufweist, der im Bereich des wenigstens einen Steuerzylinders positioniert ist, so daß er die Position des Steuerzylinders mißt.

3. Umkehrvorrichtung nach Anspruch 2, **dadurch gekennzeichnet, daß** der erste Sensor (40) die Position des Steuerzylinders stetig mißt.

4. Umkehrvorrichtung nach einem der Ansprüche 2 oder 3, **dadurch gekennzeichnet, daß** jeder Klappe eine mechanische Blockiervorrichtung (36) zugeordnet ist, die ermöglicht, ein Festhalten der Klappe sicherzustellen, wobei die Umkehrvorrichtung für jede Klappe einen zweiten Sensor (42) aufweist, der eine gegebene Zustandsgröße der mechanischen Blockiervorrichtung mißt.

5. Umkehrvorrichtung nach Anspruch 4, **dadurch gekennzeichnet, daß** jeder Klappe eine anschlagförmige Verriegelungsvorrichtung (38) zugeordnet ist, die ermöglicht, ein Festhalten der Klappe sicherzustellen, wobei die Umkehrvorrichtung für jede Klappe einen dritten Sensor (43) aufweist, welcher eine gegebene Zustandsgröße der anschlagförmigen Verriegelungsvorrichtung mißt.

6. Schubumkehrvorrichtung nach irgendeinem der Ansprüche 1 bis 5, **dadurch gekennzeichnet, daß** jedes elektronische Steuergehäuse (18a, 18b) mit den zwei Kanälen (20a, 20b) des Vollautoritäts-Elektronikrechners (20) verbunden ist, so daß der Pilot des Flugzeugs permanent über die Position der Klappen und über den Zustand der elektronischen Gehäuse, selbst bei einem Ausfall von einem der elektronischen Gehäuse und von einem der Kanäle des Vollautoritäts-Elektronikrechners informiert wird.

## Claims

1. A thrust reverser for a turbojet for fitting to an airplane, the thrust reverser comprising:
- two doors (10a, 10b) displaceable between an open position and a closed position of the reverser, each of said doors being controlled by a respective electronic control unit (18a, 18b);
- at least one sensor (40, 42, 43) per door measuring at least one item of position data concerning said door, said at least one sensor of each door being connected to said electronic control unit which controls said door in order to transmit said door position data thereto, said electronic control units being connected to each other in order to exchange said position data; and
a full authority digital engine control (FADEC) (20) having two channels (20a, 20b) each connected to an electronic control unit (18a, 18b) in order to receive from each of said electronic units the position data from each of said doors together with data concerning the operating state of each of said electronic units, the thrust reverser being **characterised in that** said channels are connected to each other so as to exchange said door position data and said electronic unit state data so that the airplane pilot is continuously informed about the positions of said doors and the states of said electronic units, even in the event of one of said electronic units breaking down and one of said FADEC channels breaking down.

2. A thrust reverser according to claim 1, **characterised in that** each door is displaceable under drive from at least one control actuator (12), said reverser including, for each door, a first sensor (40) located at said at least one control actuator so as to measure the position of said control actuator.

3. A reverser according to claim 2, **characterised in that** said first sensor (40) continuously measures the position of said control actuator.

4. A reverser according to claim 2 or claim 3, **characterised in that** each door is associated with a mechanical blocking device (36) serving to ensure that said door is held in position, said reverser including, for each door, a second sensor (42) measuring data concerning the state of said mechanical blocking device.

5. A reverser according to claim 4, **characterized in that** each door is associated with an abutment locking device (38) enabling said door to be held in position, said reverser including, for each door, a third sensor (43) measuring data concerning the state of said abutment locking device.

6. A thrust reverser according to any one of claims 1 to 5, **characterized in that** each electronic control unit (18a, 18b) is connected to the two channels (20a, 20b) of said FADEC (20) so that said airplane pilot is continuously informed about the positions of said doors and the states of said electronic units, even in the event of one of said electronic units breaking down and one of said FADEC channels breaking down.
